# EUROPÄISCHE PATENTSCHRIFT

(11) **EP 4 174 294 B1**
(45) Veröffentlichungstag und Bekanntmachung des Hinweises auf die Patenterteilung: **01.01.2025**
(21) Anmeldenummer: 22197617.8
(22) Anmeldetag: 26.09.2022
(51) Int. Cl.: F01N 3/20, F01N 3/28, H05B 3/10

(54) **HEIZEINHEIT FÜR EINE ABGASANLAGE EINER BRENNKRAFTMASCHINE**
HEATING UNIT FOR AN EXHAUST SYSTEM OF AN INTERNAL COMBUSTION ENGINE
UNITÉ DE CHAUFFAGE POUR UN SYSTÈME D'ÉCHAPPEMENT D'UN MOTEUR À COMBUSTION INTERNE

(30) Priorität: 29.10.2021 DE 102021128240
(43) Veröffentlichungstag der Anmeldung: 03.05.2023
(73) Patentinhaber: Purem GmbH, 66539 Neunkirchen (DE)
(72) Erfinder: Gaiser, Gerd, Reutlingen (DE)
(74) Vertreter: Ruttensperger Lachnit Trossin Gomoll

(56) Entgegenhaltungen:
- EP-A2- 4 023 864
- DE-U1- 202021 100 999
- US-A- 5 431 886
- US-A1- 2021 003 056

## Beschreibung

Die vorliegende Erfindung betrifft eine Heizeinheit für eine Abgasanlage einer Brennkraftmaschine, umfassend ein von Abgas in einer Abgas-Hauptströmungsrichtung durchströmbares Heizeinheitgehäuse und eine Mehrzahl von in dem Heizeinheitgehäuse angeordneten, mäanderartig geformten Heizelementen, wobei jedes Heizelement eine Mehrzahl von in einer Heizelement-Längsrichtung aufeinanderfolgenden, im Wesentlichen plattenartigen Heizabschnitten aufweist, wobei in der Heizelement-Längsrichtung aufeinander folgend angeordnete Heizabschnitte jedes Heizelements jeweils durch einen Verbindungsabschnitt miteinander verbunden sind, wobei jedes Heizelement zwei in der Heizelement-Längsrichtung in Abstand zueinander angeordnete Anschlussbereiche aufweist, wobei die Heizelemente in jedem Anschlussbereich elektrisch leitend mit einem Anschlussbereich eines weiteren Heizelements oder/und einer Spannungsquelle verbunden oder verbindbar sind, wobei bei jedem Heizelement eine Heizleiterlänge zwischen seinen Anschlussbereichen größer ist, als eine Erstreckungslänge des Heizelements zwischen seinen Anschlussbereichen in der Heizelement-Längsrichtung.

Eine derartige Heizeinheit ist aus der nachveröffentlichten deutschen Patentanmeldung 10 2020 132 800 bekannt.

Eine Heizeinheit gemäß dem Oberbegriff des Anspruchs 1 ist aus der US 2021/0003056 A1 bekannt. Diese Heizeinheit umfasst in einem einen Abgasströmungsweg umgrenzenden, rohrartigen Gehäuse mit im Wesentlichen kreisrundem Querschnitt zwei in einer Abgas-Hauptströmungsrichtung aufeinanderfolgend angeordnete, in jeweiligen Anschlussbereichen an eine Spannungsquelle angeschlossene, mäanderartig geformte Heizelemente. Mit im Wesentlichen geradlinig sich erstreckenden Heizabschnitten der beiden in der Abgas-Hauptströmungsrichtung aufeinanderfolgend angeordneten Heizelemente sind wellenartig ausgebildete Mischelemente verbunden, welche von den Heizelementen Wärme aufnehmen und diese auf die Mischelemente umströmendes Abgas übertragen.

Es ist die Aufgabe der vorliegenden Erfindung, eine derartige Heizeinheit so weiterzubilden, dass diese eine effizientere, gleichmäßigere Erwärmung des durch diese hindurch geleiteten Gasstroms gewährleistet.

Erfindungsgemäß wird diese Aufgabe gelöst durch eine Heizeinheit für eine Abgasanlage einer Brennkraftmaschine gemäß Anspruch 1. Die Heizeinheit umfasst ein von Gas, insbesondere dem von einer Brennkraftmaschine ausgestoßenen Abgas, in einer Abgas-Hauptströmungsrichtung durchströmbares Heizeinheitgehäuse und eine Mehrzahl von in dem Heizeinheitgehäuse angeordneten, mäanderartig geformten Heizelementen, wobei jedes Heizelement eine Mehrzahl von in einer Heizelement-Längsrichtung aufeinander folgenden, im Wesentlichen plattenartigen Heizabschnitten aufweist, wobei in der Heizelement-Längsrichtung aufeinander folgend angeordnete Heizabschnitte jedes Heizelements jeweils durch einen Verbindungsabschnitt miteinander verbunden sind, wobei jedes Heizelement zwei in der Heizelement-Längsrichtung in Abstand zueinander angeordnete Anschlussbereiche aufweist, wobei die Heizelemente in jedem Anschlussbereich elektrisch leitend mit einem Anschlussbereich eines weiteren Heizelements oder/und einer Spannungsquelle verbunden oder verbindbar sind, wobei bei jedem Heizelement eine Heizleiterlänge zwischen seinen Anschlussbereichen größer ist, als eine Erstreckungslänge des Heizelements zwischen seinen Anschlussbereichen in der Heizelement-Längsrichtung. Die erfindungsgemäße Heizeinheit zeichnet sich dadurch aus, dass alle Heizelemente im Wesentlichen die gleiche Heizleiterlänge aufweisen und dass wenigstens zwei, vorzugsweise alle Heizelemente quer zur Abgas-Hauptströmungsrichtung nebeneinander angeordnet sind.

Durch das Bereitstellen der Heizelemente mit einer mäanderartigen bzw. wellenartigen Struktur ist aufgrund des Umstandes, dass die Erstreckungslänge der mit dieser mäanderartigen Struktur angeordneten Heizelemente in der Heizelement-Längsrichtung im Allgemeinen deutlich kleiner ist, als die Heizleiterlänge, also Länge des nicht mit mäanderartigen Struktur angeordneten, sondern zwischen seinen Anschlussbereichen geradlinig gestreckten Heizelements, dafür gesorgt, dass in einem vergleichsweise kleinen Volumen eine große Oberfläche zur Übertragung von Wärme auf ein jeweiliges Heizelement umströmendes Gas übertragen werden kann, so dass durch das die Wärme aufnehmendes Gas, insbesondere das von einer Brennkraftmaschine ausgestoßene Abgas, eine große Wärmemenge auf stromabwärts der Heizelemente positionierte Systembereiche einer Abgasanlage, insbesondere Katalysatoren, übertragen werden kann und diese somit schnell auf die zur Durchführung der katalytischen Reaktion erforderliche Anspringtemperatur gebracht werden können. Da bei der erfindungsgemäß aufgebauten Heizeinheit dafür gesorgt ist, dass die oder zumindest einige der einzelnen Heizelemente zueinander im Wesentlichen gleiche Heizleiterlängen aufweisen, wird aufgrund des damit auch im Wesentlichen gleichmäßig gestalteten elektrischen Widerstands der verschiedenen Heizelemente dafür gesorgt, dass über jedes der Heizelemente bei Erwärmung derselben durch Anlegen einer elektrischen Spannung im Wesentlichen die gleiche Wärmemenge in das diese umströmende Abgas abgegeben werden kann und somit der die Heizeinheit durchströmende Abgasstrom über seinen Querschnitt verteilt im Wesentlichen gleichmäßig erwärmt wird.

Bei der erfindungsgemäßen Heizeinheit kann jedes Heizelement mit gebogenem Flachbandmaterial aufgebaut sein und im Wesentlichen parallel zu der Abgas-Hauptströmungsrichtung angeordnete Breitseiten und im Wesentlichen orthogonal zur Abgas-Hauptströmungsrichtung angeordnete Stirnseiten aufweisen. Wenn dabei wenigstens zwei, vorzugsweise alle Heizelemente im Wesentlichen die gleiche vorzugsweise im Wesentlichen konstante Heizleiterbreite zwischen ihren jeweiligen Stirnseiten aufweisen oder/und im Wesentlichen die gleiche, vorzugsweise im Wesentlichen konstante Dicke zwischen ihren jeweiligen Breitseiten aufweisen, wird die Bereitstellung im Wesentlichen gleicher elektrischer Widerstände in den verschiedenen Heizelementen und somit eine möglichst gleichmäßige Erwärmung des Gasstroms unterstützt.

Um eine Anpassung der Gestalt der Heizelemente an die Querschnittsgeometrie des Heizeinheitgehäuses zu erreichen, wird vorgeschlagen, dass bei wenigstens einem Heizelement eine Quer-Abmessung quer zur Abgas-Hauptströmungsrichtung und quer zur Heizelement-Längsrichtung in Richtung der Heizelement-Längsrichtung im Wesentlichen konstant ist, oder/und dass bei wenigstens einem Heizelement die Quer-Abmessung in Richtung der Heizelement-Längsrichtung variiert.

Um auch bei derartiger unterschiedlicher Gestaltung der Heizelemente die Bereitstellung im Wesentlichen gleicher elektrischer Widerstände durch diese zu unterstützen, kann bei dem wenigstens einen Heizelement mit im Wesentlichen konstanter Quer-Abmessung die Quer-Abmessung kleiner sein, als eine maximale Quer-Abmessung des wenigstens einen Heizelements mit in der Heizelement-Längsrichtung variierender Quer-Abmessung.

Zur elektrischen Kontaktierung der Heizelemente können diese in ihren Anschlussbereichen mit Kontaktelementen elektrisch leitend verbunden sein, wobei wenigstens zwei Heizelemente in einem ihrer Anschlussbereiche mit einem der Kontaktelemente elektrisch leitend sind und in ihrem anderen Anschlussbereich mit einem anderen der Kontaktelemente elektrisch leitend verbunden sind.

Zum Erhalt einer Kombination von zueinander elektrisch parallel geschalteten und zueinander elektrisch seriell geschalteten Heizelementen wird vorgeschlagen, dass bei einer ersten Gruppe mit wenigstens zwei der Heizelemente die Heizelemente in ihrem einen Anschlussbereich mit einem ersten der Kontaktelemente elektrisch leitend verbunden sind und in ihrem anderen Anschlussbereich mit einem zweiten der Kontaktelemente elektrisch leitend verbunden sind, und dass bei einer zweiten Gruppe mit wenigstens zwei der Heizelemente die Heizelemente in ihrem einen Anschlussbereich mit einem dritten der Kontaktelemente elektrisch leitend verbunden sind und in ihrem anderen Anschlussbereich mit dem zweiten der Kontaktelemente elektrisch leitend verbunden sind.

Um auch dabei eine möglichst gleichmäßige Erwärmung des Gasstroms zu gewährleisten, kann die Anzahl der Heizelemente der ersten Gruppe gleich der Anzahl der Heizelemente der zweiten Gruppe sein.

Eine möglichst gleichmäßige Erwärmung des Gasstroms durch einen über den Querschnitt der Heizeinheit im Wesentlichen konstanten Wärmeeintrag kann dadurch erreicht werden, dass bei wenigstens zwei, vorzugsweise allen Heizelementen in der Heizelement-Längsrichtung unmittelbar aufeinander folgende Heizabschnitte in der Heizelement-Längsrichtung im Wesentlichen den gleichen, vorzugsweise im Wesentlichen konstanten Abstand zueinander aufweisen, oder/und dass bei wenigstens zwei, vorzugsweise allen Heizelementen in der Heizelement-Längsrichtung unmittelbar aufeinander folgende Heizabschnitte zueinander im Wesentlichen parallel angeordnet sind.

Um bereits in der Heizeinheit selbst eine katalytische Reaktion zur Reinigung von dieses umströmendem Abgas hervorrufen zu können, ist es vorteilhaft, wenn bei wenigstens einem, vorzugsweise allen Heizelementen eine Abgas-Kontaktoberfläche wenigstens bereichsweise mit katalytisch wirksamem Material bereitgestellt ist.

Für eine definierte Positionierung der Heizelemente im Heizeinheitgehäuse kann eine Halteeinheit vorgesehen sein zum elektrisch isolierten Halten der Heizelemente an dem Heizeinheitgehäuse oder/und zum elektrisch isolierten Halten von quer zur Heizelement-Längsrichtung unmittelbar benachbarten Heizelementen bezüglich einander.

Dabei kann die Halteeinheit einen alle Heizelemente im Wesentlichen ringartig umschließenden Heizeinheitgehäuse-Haltebereich, beispielsweise aus elektrisch isolierendem Fasermaterial, wie zum Beispiel Keramikfasermaterial oder dergleichen, umfassen, oder/und kann die Halteeinheit in Zuordnung zu wenigstens einem, vorzugsweise jedem Heizelement einen Heizelement-Haltebereich umfassen.

Bei einem einfach und auch stabil realisierbaren Aufbau kann wenigstens ein Teil der Heizelement-Haltebereiche bzw. können alle Heizelement-Haltebereiche miteinander einstückig, also als integrale bzw. monolithische Struktur, ausgebildet sein.

Zum Ermöglichen einer einfachen Verbindung der Heizelemente mit der Halteeinheit ist es vorteilhaft, wenn wenigstens ein, vorzugsweise jeder Heizelement-Haltebereich zwei in der Abgas-Hauptströmungsrichtung aufeinanderfolgend angeordnete, voneinander getrennt ausgebildete Teile umfasst.

Eine definierte Positionierung der Heizelemente in der Halteeinheit kann dadurch unterstützt werden, dass wenigstens ein, vorzugsweise jeder Heizelement-Haltebereich in Zuordnung zu wenigstens einem, vorzugsweise jedem dadurch gehaltenen Heizelement eine Formschluss-Halteformation zum Halten wenigstens eines, vorzugsweise jedes Verbindungsbereichs des wenigstens einen dadurch gehaltenen Heizelements gegen Bewegung in der Heizelement-Längsrichtung aufweist.

Hierzu kann wenigstens eine, vorzugsweise jede Formschluss-Halteformation eine Mehrzahl von jeweils zwischen zwei in der Heizelement-Längsrichtung unmittelbar benachbarte Verbindungsabschnitte eingreifenden Haltevorsprüngen umfassen, oder/und kann wenigstens eine, vorzugsweise jede Formschluss-Halteformation eine Mehrzahl von jeweils zwischen zwei durch einen Verbindungsabschnitt miteinander verbundenen Heizabschnitten eingreifenden Haltevorsprüngen umfassen.

Zum Vermeiden eines durch die Halteeinheit selbst herbeigeführten elektrischen Kurzschlusses wird vorgeschlagen, dass die Halteeinheit wenigstens an ihren in Kontakt mit den Heizelementen stehenden Bereichen, vorzugsweise im Wesentlichen vollständig mit elektrisch isolierendem Material aufgebaut oder/und beschichtet ist.

Bei der erfindungsgemäßen aufgebauten Heizeinheit können wenigstens zwei, vorzugsweise alle Heizelemente mit zueinander im Wesentlichen paralleler Heizelement-Längsrichtung angeordnet sein, oder/und kann bei wenigstens einem, vorzugsweise jedem Heizelement wenigstens ein Teil der, vorzugsweise alle Heizabschnitte zur Heizelement-Längsrichtung im Wesentlichen orthogonal angeordnet sein.

Die Erfindung betrifft ferner eine Abgasanlage für eine Brennkraftmaschine, umfassend eine erfindungsgemäß aufgebaute Heizeinheit stromaufwärts bezüglich einer beispielsweise einen Katalysator oder/und einen Partikelfilter umfassenden Abgasbehandlungseinheit.

Die Erfindung wird nachfolgend mit Bezug auf die beiliegenden Figuren detailliert beschrieben. Es zeigt:
- Fig. 1: eine Querschnittansicht einer Heizeinheit für eine Abgasanlage einer Brennkraftmaschine;
- Fig. 2: eine Querschnittansicht einer alternativen Ausgestaltungsart einer Heizeinheit für eine Abgasanlage;
- Fig. 3: eine Teil-Querschnittansicht einer weiteren alternativen Ausgestaltungsart einer Heizeinheit für eine Abgasanlage einer Brennkraftmaschine;
- Fig. 4: in ihren Darstellungen a) und b) verschiedene Ausgestaltungsarten von Heizelement-Haltebereichen zum Halten von mäanderartig geformten Heizelementen in definierter Position;
- Fig. 5: eine weitere Teil-Querschnittansicht einer Heizeinheit mit alternativ geformten Heizelement-Haltebereichen;
- Fig. 6: in ihren Darstellungen a) und b) einen beispielsweise bei der Heizeinheit der Fig. 2 eingesetzten Heizelement-Haltebereich;
- Fig. 7: eine weitere Querschnittansicht einer Heizeinheit für eine Abgasanlage einer Brennkraftmaschine;
- Fig. 8: eine Halteeinheit mit als eine integrale Struktur bereitgestellten Heizelement-Haltebereichen;
- Fig. 9: eine prinzipartige Darstellung einer Abgasanlage mit einer Heizeinheit stromaufwärts bezüglich einer Abgasbehandlungseinheit.

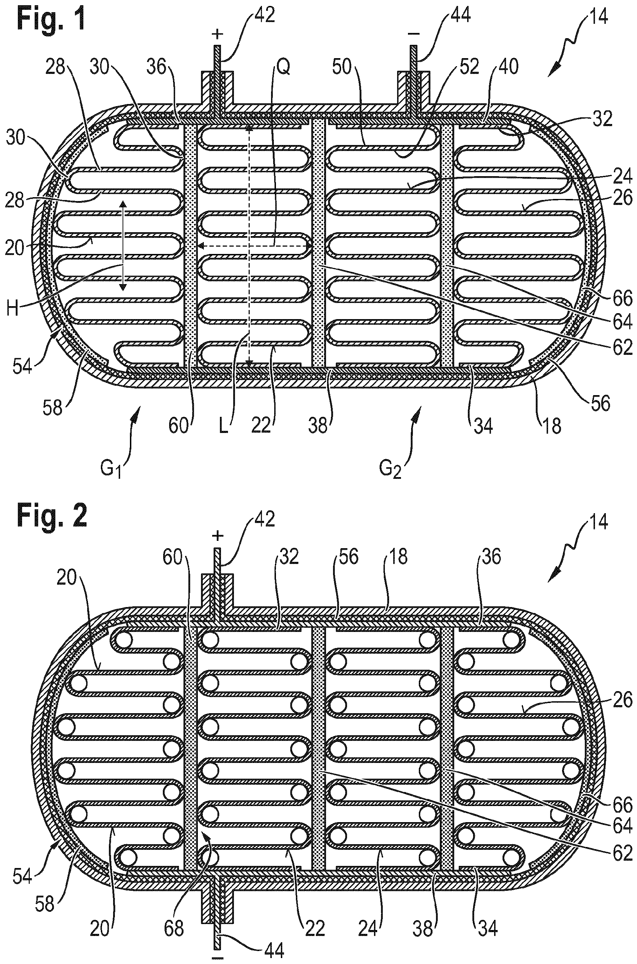

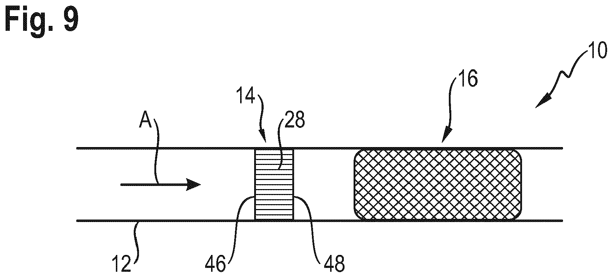

Bevor nachfolgend mit Bezug auf die Fig. 1 bis 8 Ausgestaltungsdetails von Heizeinheiten erläutert werden, wird mit Bezug auf die Fig. 9 dargelegt, wie eine derartige Heizeinheit in eine Abgasanlage einer Brennkraftmaschine integriert ist.

Die Fig. 9 zeigt einen Abschnitt einer derartigen Abgasanlage 10, bei welcher in einem einstückig oder mit mehreren aufeinanderfolgenden Teilen zusammengesetzten, beispielsweise rohrartigen Gehäuse 12 eine allgemein mit 14 bezeichnete Heizeinheit und stromabwärts bezüglich einer Abgas-Hauptströmungsrichtung A eine Abgasbehandlungseinheit 16 angeordnet ist. Die Abgasbehandlungseinheit 16 kann einen oder mehrere Katalysatoren oder/und einen Partikelfilter umfassen und kann beispielsweise als Oxidationskatalysator oder dergleichen wirken. Umfasst die Abgasbehandlungseinheit 16 einen SCR-Katalysator, kann stromaufwärts der Heizeinheit 14 ein Injektor zum Eingeben eines Reaktionsmittels, beispielsweise einer Harnstoff/Wasser-Lösung in den in dem rohrartigen Gehäuse 12 geführten Abgasstrom vorgesehen sein.

Durch die Heizeinheit 14 kann bei Anlegen einer elektrischen Spannung an diese in einer Startphase des Arbeitsbetriebs einer Brennkraftmaschine, wenn das von dieser ausgestoßene Abgas eine vergleichsweise geringe Temperatur aufweist, Wärme auf dieses Abgas übertragen werden und von dem Abgas in Richtung zur Abgasbehandlungseinheit 16 transportiert und auf diese übertragen werden. Somit wird es möglich, die Abgasbehandlungseinheit 16 schnell auf die für die Durchführung einer katalytischen Reaktion erforderliche Temperatur zu bringen. Auch bereits vor Inbetriebnahme einer Brennkraftmaschine kann durch das rohrartige Gehäuse 12 ein Gasstrom, beispielsweise ein Luftstrom, geleitet werden, um in der Heizeinheit 14 Wärme auf diese und somit auch die stromabwärts dann folgende Abgasbehandlungseinheit 16 zu übertragen.

Eine erste Ausgestaltungsform einer derartigen Heizeinheit 14 ist in Fig. 1 dargestellt. Die Heizeinheit 14 umfasst ein beispielsweise rohrartiges Heizeinheitgehäuse 18, welches beispielsweise durch das rohrartige Gehäuse 12 der Abgasanlage 10 selbst bereitgestellt sein kann oder in dieses eingesetzt werden kann. Im Inneren des Heizeinheitgehäuses 18 sind in dem in Fig. 1 dargestellten Ausgestaltungsbeispiel quer zu der zur Zeichenebene der Fig. 1 orthogonalen Abgas-Hauptströmungsrichtung A vier Heizelemente 20, 22, 24, 26 angeordnet. Die Heizelemente 20, 22, 24, 26 sind mit in eine mäanderartige bzw. wellenartige Struktur gebogenem Flachbandmaterial aus Metallmaterial oder sonstigem elektrisch leitendem und dabei sich erwärmendem Material aufgebaut und sind mit ihrer mäanderartigen Struktur in einer Heizelement-Längsrichtung H langgestreckt ausgebildet.

Wie anhand des in Fig. 1 links dargestellten Heizelements 20 veranschaulicht, ist jedes dieser mit mäanderartiger Struktur aufgebaute Heizelement 20, 22, 24, 26 mit einer Mehrzahl von im Wesentlichen orthogonal zur Heizelement-Längsrichtung H angeordneten, plattenartigen Heizabschnitten 28 und jeweils zwei in der Heizelement-Längsrichtung H unmittelbar aufeinander folgende Heizabschnitte 28 verbindenden Verbindungsabschnitten 30 aufgebaut. Die Verbindungsabschnitte 30 stellen jeweilige Scheitelbereiche der mäanderartigen bzw. wellenartigen Struktur bereit, und der Abstand zweier in der Heizelement-Längsrichtung H unmittelbar aufeinander folgender Verbindungsabschnitte 30 quer bzw. orthogonal zur Heizelement-Längsrichtung H definiert eine Quer-Abmessung Q des jeweiligen Heizelements 20, 22, 24, 26. Deutlich zu erkennen ist in Fig. 1, dass bei den beiden im zentralen Bereich der Heizeinheit 14 angeordneten Heizelementen 22, 24 die Quer-Abmessung Q in der Heizelement-Längsrichtung H im Wesentlichen konstant ist, während zur Anpassung an die gewölbte Struktur des Heizeinheitgehäuses 18 die beiden äußeren Heizelemente 20, 26 eine in der Heizelement-Längsrichtung H variierende Quer-Abmessung Q aufweisen, welche in einem in der Heizelement-Längsrichtung H zentralen Bereich der Heizelemente 20, 26 ihren maximalen Wert annimmt und, ausgehend von diesem zentralen Bereich, in beiden Richtungen abnimmt.

Wie anhand des Heizelements 26 veranschaulicht, weist jedes der Heizelemente 20, 22, 24, 26 an seinen in der Heizelement-Längsrichtung H gelegenen Endbereichen jeweils einen Anschlussbereich 32, 34 auf. Jedes Heizelement 20, 22, 24, 26 ist mit jedem seiner beiden Anschlussbereiche 30, 32, 34 mit einem plattenartig bzw. schienenartig ausgebildeten Kontaktelement 36, 38 bzw. 40 elektrisch leitend verbunden. Diese Verbindung kann beispielsweise stoffschlüssig, also z. B. durch Löten, Schweißen oder Bonding, erfolgen, oder kann formschlüssig, also beispielsweise durch Schrauben oder Nieten oder dergleichen, erfolgen, oder kann beispielsweise kraftschlüssig, also beispielsweise durch Klemmen, Pressen, Crimpen oder dergleichen, erfolgen.

Um dafür zu sorgen, dass im Bereich der Kontaktelemente 36, 38, 40 im Wesentlichen keine Wärme durch den diese durchfließenden elektrischen Strom erzeugt wird, können die Kontaktelemente 36, 38, 40 beispielsweise mit größerer Dicke als die Heizelemente 20, 22, 24, 26 bereitgestellt werden oder grundsätzlich mit Material mit geringerem elektrischen Widerstand aufgebaut sein.

Bei der in Fig. 1 dargestellten Anordnung sind die beiden nebeneinander liegenden Heizelemente 20, 22 in ihren in dieser Darstellung oberen Anschlussbereichen 32 mit dem Kontaktelement 36 verbunden, und sind in ihren in Fig. 1 unten angeordneten Anschlussbereichen 34 mit dem Kontaktelement 38 elektrisch leitend verbunden. Die beiden Heizelemente 20, 22 bilden somit eine erste Gruppe G₁ von Heizelementen, welche elektrisch zueinander parallel geschaltet sind. Gleichermaßen sind die beiden in Fig. 1 rechts dargestellten Heizelemente 24, 26 mit ihren in dieser Figur oben liegenden Anschlussbereichen 32 mit dem Kontaktelement 40 elektrisch leitend verbunden, und sind in ihren unten liegenden Anschlussbereichen 34 ebenfalls mit dem Kontaktelement 38 elektrisch leitend verbunden, so dass diese beiden Heizelemente 24, 26 eine zweite Gruppe G₂ von Heizelementen bilden, die zueinander elektrisch parallel geschaltet sind. Die beiden Gruppen G₁ und G₂ von Heizelementen sind zueinander seriell geschaltet. Hierzu sind die Kontaktelemente 36, 40 über bezüglich des Heizeinheitgehäuses elektrisch isolierte Durchführungen 42, 44 mit den beiden Polen einer Spannungsquelle, beispielsweise einer Batterie in einem Fahrzeug oder dergleichen, verbunden oder verbindbar.

Die beiden Gruppen G₁, G₂ von Heizelementen sind hinsichtlich der diese jeweils bereitstellenden Heizelemente zueinander im Wesentlichen identisch aufgebaut. Jede Gruppe G₁, G₂ umfasst ein Heizelement 22, 24 mit im Wesentlichen konstanter Quer-Abmessung Q, und jede dieser Gruppen G₁, G₂ umfasst ein Heizelement 20, 26 mit variierender Quer-Abmessung Q. Dazu sind vorteilhafterweise die beiden Heizelemente 22, 24 mit im Wesentlichen konstanter Quer-Abmessung Q zueinander identisch, während auch die beiden Heizelemente 20, 26 mit variierender Quer-Abmessung Q zueinander identisch sind.

Durch diese innerhalb der Gruppen G₁, G₂ gewählte Gestalt der jeweiligen Heizelemente 20, 22 bzw. 24, 26 wird eine hinsichtlich des in jeder Gruppe G₁, G₂ vorhandenen elektrischen Widerstands gleiche Ausgestaltung unterstützt.

Zu dieser Vereinheitlichung des elektrischen Widerstands trägt auch bei, dass bei dem in Fig. 1 dargestellten Aufbau einer Heizeinheit 14 alle Heizelemente 20, 22, 24, 26 zueinander im Wesentlichen gleiche Heizleiterlänge aufweisen, welche aufgrund der mäanderartigen Struktur der Heizelemente 20, 22, 24, 26 deutlich größer ist, als die Erstreckungslänge L der jeweiligen Heizelemente 20, 22, 24, 26 zwischen ihren Anschlussbereichen 32, 34 in der Heizelement-Längsrichtung H. Es ist darauf hinzuweisen, dass diese Heizleiterlänge diejenige Länge eines jeweiligen Heizelements 20, 22, 24, 26 ist, welches dieses zwischen seinen jeweiligen Anschlussbereichen 32, 34 aufweist, wenn es in langgestreckter Konfiguration, also nicht in mäanderartiger bzw. wellenartiger Struktur bereitgestellt ist und beispielsweise, ausgehend von der in Fig. 1 dargestellten mäanderartigen Struktur zwischen seinen beiden Anschlussbereichen 32, 34 so lange gestreckt wird, bis es eine im Wesentlichen geradlinige Struktur aufweist.

Auch diese Ausgestaltung aller Heizelemente 20, 22, 24, 26 mit gleicher Heizleiterlänge trägt dazu bei, dass in jedem Heizelement 20, 22, 24, 26 im Wesentlichen der gleiche elektrische Widerstand vorhanden ist. Insbesondere trägt hierzu auch bei, dass bei Vergleich der Heizelemente 22, 24 mit konstanter Quer-Abmessung Q diese Quer-Abmessung Q kleiner ist, als die maximale Quer-Abmessung Q der beiden Heizelemente 20, 26 mit variierender Quer-Abmessung Q, jedoch kleiner ist, als die minimale Quer-Abmessung Q dieser Heizelemente 20, 26 mit variierender Quer-Abmessung Q.

Zur Vereinheitlichung des elektrischen Widerstands der Heizelemente 20, 22, 24, 26 trägt auch bei, dass diese, betrachtet in der Abgas-Hauptströmungsrichtung A zwischen jeweiligen zur Abgas-Hauptströmungsrichtung im Wesentlichen orthogonal angeordneten Stirnseiten 46, 48 (siehe Fig. 9) eine zueinander gleiche und vorzugsweise konstante Breite aufweisen, und dass alle Heizelemente 20, 22, 24, 26 zwischen den beiden zwischen den Stirnseiten 46, 48 derselben sich erstreckenden Breitseiten 50, 52 die gleiche, vorzugsweise im Wesentlichen konstante Dicke, also Materialstärke, aufweisen.

Mit dieser Struktur der Heizelemente 20, 22, 24, 26, welche beispielsweise dadurch erhalten werden kann, dass zueinander im Wesentlichen identische Rohlinge von elektrisch leitendem Flachmaterial in die verschiedenen mäanderartigen Strukturen für die Heizelemente 22, 24 einerseits und die Heizelemente 20, 26 andererseits gebogen werden, wird aufgrund der zueinander im Wesentlichen gleichen elektrischen Widerstände der Heizelemente 20, 22, 24, 26 sichergestellt, dass im Bereich von jedem dieser Heizelemente im Wesentlichen die gleiche Heizleistung generiert wird und somit die gleiche Wärmemenge zu dem die Heizelemente 20, 22, 24, 26 umströmendem Gasstrom, beispielsweise Abgasstrom, abgegeben werden kann.

Zur weiteren Vergleichmäßigung der Wärmeabgabe in den Gasstrom bzw. Abgasstrom trägt auch bei, dass die Heizabschnitte 28 der Heizelemente 20, 22, 24, 26 zueinander jeweils den gleichen Abstand aufweisen. Bei der in Fig. 1 veranschaulichten Ausgestaltung, bei welcher die Heizabschnitte 28 in jedem der Heizelemente 20, 22, 24, 26 zur Heizelement-Längsrichtung H jeweils im Wesentlichen orthogonal angeordnet sind, sind somit also die Heizabschnitte 28 zueinander parallel angeordnet und weisen zu jeweils unmittelbar benachbarten Heizabschnitten 28 einen Abstand auf, der vorzugsweise bei allen Heizelementen 20, 22, 24, 26 gleich ist. Auch bei Heizabschnitten 28, die zueinander nicht parallel angeordnet sind, beispielsweise wenn unmittelbar benachbarte Heizabschnitte 28 zueinander eine V-förmige Anordnung aufweisen, kann der jeweilige Abstand bei jeweiligen Paaren unmittelbar benachbarter Heizabschnitte 28 gleich sein, quer zur Heizelement-Längsrichtung H jedoch variieren. Auch dadurch wird eine über den Querschnitt der gesamten Heizeinheit 14 möglichst gleichmäßige Wärmeabgabe in den Gasstrom erreicht, da pro Querschnittsflächeneinheit im Wesentlichen die gleiche Heizleistung generiert wird und somit im Wesentlichen die gleichen Wärmelänge zur Abgabe in den Gasstrom bzw. indem Abgasstrom bereitgestellt wird.

Bevor nachfolgend detaillierter erläutert wird, wie vermittels einer allgemein mit 54 bezeichneten Halteeinheit die Heizelemente 20, 22, 24, 26 und auch die Kontaktelemente 36, 38, 40 definiert im Heizeinheitgehäuse 18 gehalten werden, wird mit Bezug auf die Fig. 2 eine hinsichtlich der elektrischen Verschaltung der Heizelemente 20, 22, 24, 26 alternative Anordnung beschrieben. Bei der in Fig. 2 dargestellten Heizeinheit 14 sind alle vier Heizelemente 20, 22, 24, 26 in ihrem jeweiligen oberen Anschlussbereich 32 mit dem alle vier Heizelemente 20, 22, 24, 26 überdeckenden Kontaktelement 36 elektrisch leitend verbunden, während die unten liegenden Anschlussbereiche 34 aller Heizelemente 20, 22, 24, 26 mit dem unten positionierten Kontaktelement 38 verbunden sind. Das Kontaktelement 36 ist vermittels der Durchführung 42 mit einem der Pole einer Spannungsquelle verbunden oder verbindbar, und das Kontaktelement 38 ist vermittels der Durchführung 44 mit dem anderen Pol der Spannungsquelle verbunden oder verbindbar.

Auch bei derartiger serieller Schaltung aller Heizelemente 20, 22, 24, 26 wird aufgrund der vorangehend detailliert erläuterten Struktur der Heizelemente 20, 22, 24, 26 eine über den Querschnitt des Heizeinheitgehäuses 18 im Wesentlichen gleichmäßige Wärmeabgabe in den das Heizeinheitgehäuse 18 durchströmenden Gasstrom gewährleistet.

Die bereits vorangehend mit Bezug auf die Fig. 1 angesprochene Halteeinheit 54 umfasst als äußersten Bereich einen im Wesentlichen alle Heizelemente 20, 22, 24, 26 und auch die Kontaktelemente 36, 38 und im Falle der Fig. 1 auch 40 ringartig umgebenden Heizeinheitgehäuse-Haltebereich 56. Dieser ist beispielsweise mit elektrisch isolierendem Fasermaterial, wie z. B. Keramikfasermaterial oder dergleichen, oder als Formteil aufgebaut und verhindert einen elektrischen Kurzschluss verschiedener Komponenten zu dem im Allgemeinen mit Metallmaterial aufgebauten Heizeinheitgehäuse 18.

Die Halteeinheit 54 umfasst ferner fünf Heizelement-Haltebereiche 58, 60, 62, 64, 66. Dabei können beispielsweise die beiden außen in den wölbungsartigen Bereichen des Heizeinheitgehäuses 18 positionierten Heizelement-Haltebereiche 58, 66 zueinander im Wesentlichen identisch aufgebaut sein, und auch die jeweils zwischen zwei der Heizelemente 20, 22, 24, 26 positionierten Heizelement-Haltebereiche 60, 62, 64, 66 können zueinander im Wesentlichen identisch aufgebaut sein.

Auch die verschiedenen Heizelement-Haltebereiche 58, 60, 62, 64, 66 können zum Vermeiden insbesondere eines elektrischen Kurzschlusses zwischen einander unmittelbar benachbarten Heizelementen 20, 22, 24, 26 vollständig aus elektrisch isolierendem Material, wie z. B. Kunststoffmaterial oder Keramikmaterial, aufgebaut sein, oder können beispielsweise auch aus Metallmaterial aufgebaut sein, das zumindest dort, wo ein Kontakt zu jeweils einem der Heizelemente 20, 22, 24, 26 besteht, eine elektrisch isolierende Beschichtung, beispielsweise mit keramischem Material oder dergleichen, aufweist.

In Umfangsrichtung zwischen den Umfangsenden der beiden außen positionierten Heizelement-Haltebereiche 58, 66 sind die verschiedenen Kontaktelemente 36, 38, 40 angeordnet und diese ringartige Struktur aus Heizelement-Haltebereichen 58, 66 und Kontaktelementen 36, 38 und ggf. 40 ist von der vorangehend bereits beschriebenen ringartigen Struktur des Heizeinheitgehäuse-Haltebereichs 56 umgeben.

Durch die Heizelement-Haltebereiche 58, 60, 62, 64, 66 wird nicht nur eine gegenseitige Halterung bzw. Abstützung der Heizelemente 22, 24, 26 bezüglich einander bzw. bezüglich des Heizeinheitgehäuses 18 im Wesentlichen quer zur Heizelement-Längsrichtung H gewährleistet, sondern die einzelnen Heizelemente 20, 22, 24, 26 werden auch in ihren jeweiligen Verbindungsabschnitten 30 gegen Bewegung insbesondere in der Heizeinheit-Längsrichtung H gehalten. Dazu weisen die Heizelement-Haltebereiche 58, 60, 62, 64, 66 in Zuordnung zu jedem der dadurch gehaltenen bzw. abgestützten Heizelemente 20, 22, 24, 26 jeweils eine allgemein mit 68 bezeichnete Formschluss-Halteformation auf. Die nachfolgend anhand verschiedener Ausgestaltungsbeispiele erläuterten Formschluss-Halteformationen 68 sorgen dafür, dass zwischen den Heizelementen, 20, 22, 24, 26 im Bereich von deren jeweiligen Verbindungsabschnitten 30 und den Heizelement-Haltebereichen 58, 60, 62, 64, 66 ein in der Heizelement-Längsrichtung H wirksamer Formschluss erzeugt wird, so dass eine Bewegung der Heizelemente 22, 24, 26, 28 im Bereich ihrer Verbindungsabschnitte 30 in der Heizelement-Längsrichtung H im Wesentlichen ausgeschlossen ist.

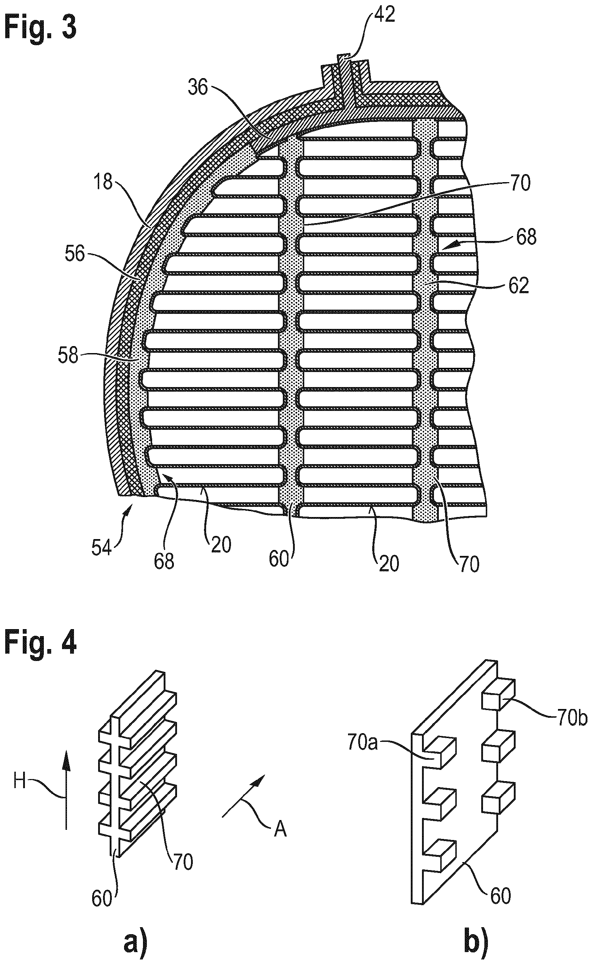

Bei der in Fig. 3 veranschaulichten Ausgestaltung weist die jeweilige Formschluss-Halteformation 68 eine Mehrzahl von zwischen zwei unmittelbar benachbarte Verbindungsabschnitte 30 eingreifenden Haltevorsprüngen 70 auf. Der gegenseitige Abstand unmittelbar benachbarter Haltevorsprünge 70 in der Heizelement-Längsrichtung H entspricht im Wesentlichen auch der Ausdehnung der Verbindungsabschnitte in der Heizelement-Längsrichtung H bzw. auch dem gegenseitigen Abstand der Heizabschnitte 28.

Wie in Fig. 4 veranschaulicht, können diese Haltevorsprünge 70 in der Abgas-Hauptströmungsrichtung A, also in der Erstreckungsrichtung der dadurch jeweils gehaltenen Verbindungsabschnitte 30 zwischen den Stirnseiten 46, 48, durchlaufend ausgebildet sein oder können als jeweilige Haltevorsprungabschnitte 70a, 70b ausgebildet sein, die beispielsweise jeweils nur in den angrenzend an die Stirnseiten 46, 48 liegenden Längenbereiche wirken.

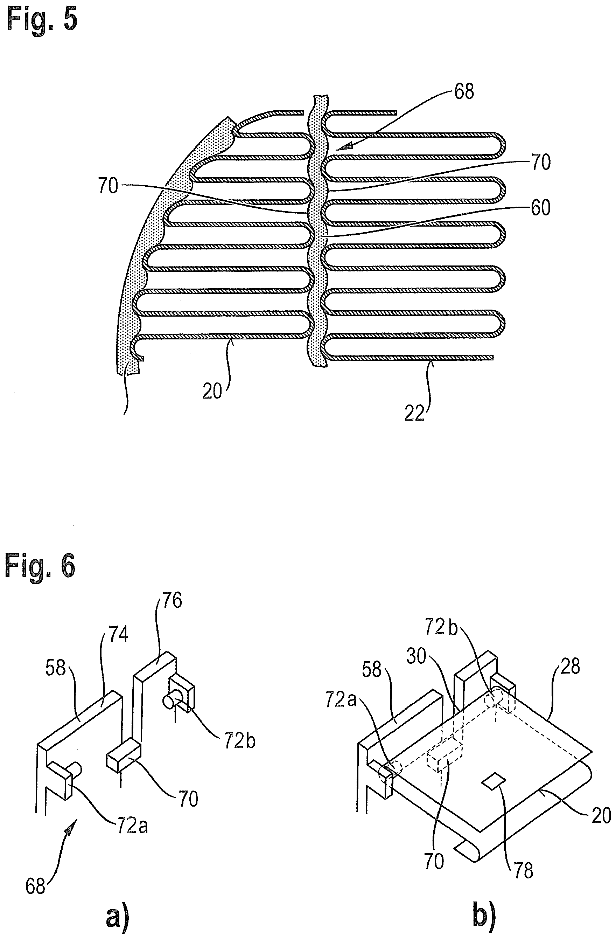

Bei einer in Fig. 5 dargestellten Weiterbildung bzw. alternativen Ausgestaltung der Formschluss-Halteformationen 68 können, wie insbesondere anhand des Heizelement-Haltebereichs 60 veranschaulicht, die Haltevorsprünge 70 mit einer wellenartigen Oberflächenstruktur bereitgestellt sein, welche insbesondere bei dem zwischen jeweils zwei Heizelementen wirkenden Heizelement-Haltebereichen 60, 62, 64 durch eine insgesamt wellenartige Struktur derselben bereitgestellt werden kann. Insbesondere bei der in Fig. 5 dargestellten Ausgestaltung der wellenartigen Struktur der Formschluss-Halteformationen 68 können diese an miteinander zu verbindenden einzelnen Komponenten bzw. Lagen oder in einem integralen Bauteil ausgebildet sein, welches jeweils einen der Heizelement-Haltebereiche bereitstellt.

Man erkennt im Vergleich der Fig. 3 und 5, dass bei der durch eine wellenartige Struktur bereitgestellten Ausgestaltung der Formschluss-Halteformationen 68 die Abstützabschnitte 30 unmittelbar benachbarter Heizelemente 20, 22, 24, 26 in der Heizelement-Längsrichtung H zueinander versetzt sind, während bei der in Fig. 3 dargestellten Ausgestaltungsart die Haltevorsprünge 70 und somit auch die dazwischen gebildeten Aussparungen zur Aufnahme jeweiliger Verbindungsabschnitte 30 zueinander in der Heizelement-Längsrichtung H nicht versetzt sind.

Bei einer in Fig. 6 veranschaulichten Ausgestaltung umfasst die anhand des Heizelement-Haltebereichs 58 veranschaulichte Formschluss-Halteformation 68 beispielsweise zapfenartig geformte Haltevorsprünge 72a, 72b, welche so positioniert bzw. geformt sind, dass diese zwischen die durch einen Verbindungsabschnitt 30 miteinander verbundenen Heizabschnitte 28 eingreifen. Um diesen Eingriff zu ermöglichen, ist vorzugsweise ein eine derartige Formschluss-Halteformation 68 aufweisender Heizelement-Haltebereich mit zwei in der Abgas-Hauptströmungsrichtung A aufeinanderfolgend positionierten Teilen 74, 76 aufgebaut. Jedes dieser Teile 74, 76 weist einen der einander jeweils paarweise zugeordneten Haltevorsprünge 72a, 72b auf. Beim Zusammenbau können diese beiden Teile 74, 76 von beiden Seiten an die Stirnseiten 46 bzw. 48 herangeführt werden, bis die Haltevorsprünge 72a, 72b die in Fig. 6b) dargestellte Positionierung einnehmen und in die mäanderartige Struktur des hier dargestellten Heizelements 20 eingreifen.

Zur optionalen bzw. zusätzlichen Halterung kann an einem der beiden Teile 74, 76 eine Mehrzahl von Haltevorsprüngen 70 vorgesehen sein, wobei jeder derartige Haltevorsprung 70, so wie dies vorangehend mit Bezug auf die Fig. 4 beschrieben wurde, zwischen zwei dann jeweils durch ein Paar von Haltevorsprüngen 72a, 72b gehaltene Verbindungsabschnitte 30 eingreifend positioniert wird.

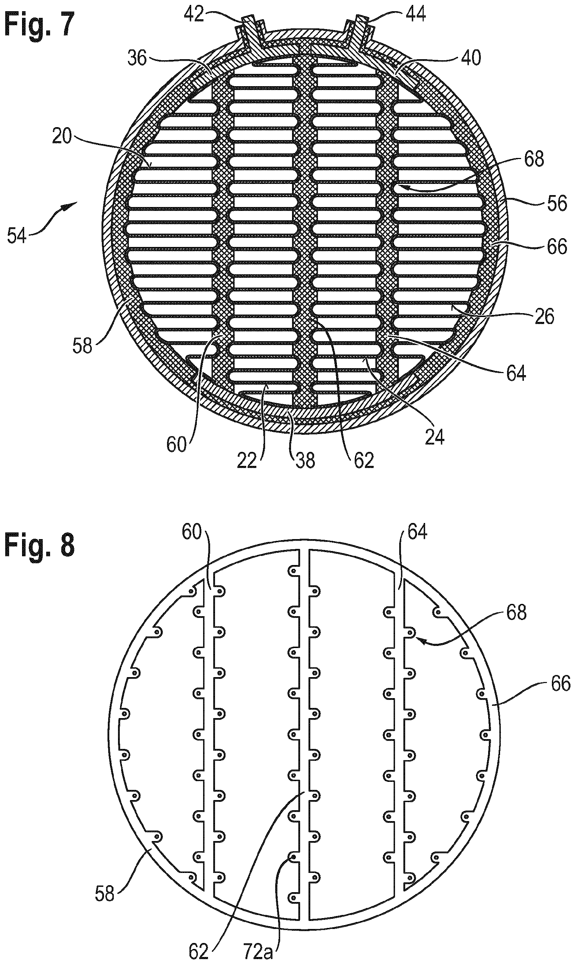

Eine weitere alternative Ausgestaltung der Halteeinheit 54 ist in den Fig. 7 und 8 veranschaulicht. Auch diese Halteformation 54 umfasst den beispielsweise mit Keramikfasermaterial oder auch als Formteil beispielsweise aus keramischen Material aufgebauten Heizeinheitgehäuse-Haltebereich 56, der die Heizelemente 20, 22, 24, 26 und auch die Kontaktelemente 36, 38, 40 ringartig umgibt und somit eine elektrische Isolierung zu dem in Fig. 8 nicht dargestellten Heizeinheitgehäuse erzeugt.

Alle Heizelement-Haltebereiche 58, 60, 62, 64, 66 sind bei dieser Ausgestaltung als eine integrale, also monolithische Struktur bereitgestellt. Um auch bei dieser Ausgestaltungsart die in Fig. 7 dargestellten und zwischen jeweils zwei durch einen Verbindungsabschnitt 30 miteinander verbundene Heizabschnitte 28 eingreifenden Haltevorsprünge 72a, 72b in einfacher Weise einsetzen zu können, kann auch bei dieser integralen bzw. monolithischen Struktur der Heizelement-Halteabschnitte 58, 60, 62, 64, 66 ein Aufbau mit zwei in der Abgas-Hauptströmungsrichtung A aufeinander folgenden Teilen, so wie dies in Fig. 6 veranschaulicht ist, vorgesehen sein. In jedem dieser beiden Teile ist dann eine einstückige bzw. monolithische Struktur jeweils eines Teils von jedem der Heizelement-Haltebereiche 58, 60, 62, 64, 66 vorgesehen.

Besonders vorteilhaft bei dieser integralen Struktur ist, dass Aussparungen zur Aufnahme der Kontaktelemente 36, 38, 40 vorgesehen sein können, so dass auch diese in definierter Positionierung gehalten werden.

Wie bereits erwähnt, können vorteilhafterweise die Heizelement-Haltebereiche 58, 60, 62, 64, 66 mit elektrisch isolierendem Material, wie beispielsweise Keramikmaterial oder Glaskeramikmaterial, aufgebaut sein. Alternativ kann ein metallisches Grundmaterial mit einer elektrisch isolierenden Umhüllung bereitgestellt werden, die gleichermaßen mit Keramikmaterial aufgebaut sein kann, alternativ auch als eine Emailschicht oder eine Glaskeramikschicht ausgebildet sein kann. Der elektrisch bezüglich des Heizeinheitgehäuses 18 isolierende Heizeinheitgehäuse-Haltebereich 56 kann als beispielsweise keramisches Formteil ein- oder mehrstückig ausgebildet sein oder kann als Fasermaterial, beispielsweise Keramikfasermaterial, Glasfasermaterial, Mineralfasermaterial oder auch als eine starre Struktur aus Glaskeramik bereitgestellt werden.

Gemäß einer weiteren besonders vorteilhaften Weiterbildung der erfindungsgemäßen Heizeinheit 14 besteht die Möglichkeit, eines oder mehrere der Heizelemente 20, 22, 24, 26 bereichsweise oder vollständig mit katalytisch wirksamem Material 78 zu beschichten. Hierzu kann beispielsweise das elektrisch leitende Aufbaumaterial aus einer Stahl-Legierung mit einem Aluminiumgehalt von etwa 5%, beispielsweise 1.4767, aufgebaut sein, und auf dieses Metall-Grundmaterial kann, je nach Anwendung eine TWC-Beschichtung für die Verwendung in Verbindung mit Benzinmotoren oder eine DOC-Beschichtung für die Verwendung in Verbindung mit Dieselmotoren aufgebracht werden.

Durch das Bereitstellen einer derartigen katalytisch wirksamen Beschichtung wird gewährleistet, dass auch aufgrund der Möglichkeit, diese unmittelbar elektrisch zu erwärmen, die Temperatur, bei welcher die katalytische Reaktion einsetzt, sehr schnell nach einem Kaltstart erreicht wird, so dass die Zeitdauer, in welcher von einer Brennkraftmaschine ausgestoßenes Abgas ohne katalytische Reaktion zur Umgebung abgegeben wird, weiter deutlich verkürzt werden kann.

## Patentansprüche

1. Heizeinheit für eine Abgasanlage einer Brennkraftmaschine, umfassend ein von Gas in einer Abgas-Hauptströmungsrichtung (A) durchströmbares Heizeinheitgehäuse (18) und eine Mehrzahl von in dem Heizeinheitgehäuse (18) angeordneten, mäanderartig geformten Heizelementen (20, 22, 24, 26), wobei jedes Heizelement (20, 22, 24, 26) eine Mehrzahl von in einer Heizelement-Längsrichtung (H) aufeinander folgenden Heizabschnitten (28) aufweist, wobei in der Heizelement-Längsrichtung (H) aufeinander folgend angeordnete Heizabschnitte (28) jedes Heizelements (20, 22, 24, 26) jeweils durch einen Verbindungsabschnitt (30) miteinander verbunden sind, wobei jedes Heizelement (20, 22, 24, 26) zwei in der Heizelement-Längsrichtung in Abstand zueinander angeordnete Anschlussbereiche (32, 34) aufweist, wobei die Heizelemente (20, 22, 24, 26) in jedem Anschlussbereich (32, 34) elektrisch leitend mit einem Anschlussbereich (32, 34) eines weiteren Heizelements (20, 22, 24, 26) oder/und einer Spannungsquelle verbunden oder verbindbar sind, wobei bei jedem Heizelement (20, 22, 24, 26) eine Heizleiterlänge zwischen seinen Anschlussbereichen (32, 34) größer ist, als eine Erstreckungslänge des Heizelements (20, 22, 24, 26) zwischen seinen Anschlussbereichen (32, 34) in der Heizelement-Längsrichtung (H), wobei alle Heizelemente (20, 22, 24, 26) im Wesentlichen die gleiche Heizleiterlänge aufweisen, **dadurch gekennzeichnet, dass** die Heizabschnitte (28) im Wesentlichen plattenartig ausgebildet sind, und dass wenigstens zwei Heizelemente (20, 22, 24, 26) quer zur Abgas-Hauptströmungsrichtung (A) nebeneinander angeordnet sind.

2. Heizeinheit nach Anspruch 1, **dadurch gekennzeichnet, dass** jedes Heizelement (20, 22, 24, 26) mit gebogenem Flachbandmaterial aufgebaut ist und im Wesentlichen parallel zu der Abgas-Hauptströmungsrichtung (A) angeordnete Breitseiten (50, 52) und im Wesentlichen orthogonal zur Abgas-Hauptströmungsrichtung (A) angeordnete Stirnseiten (46, 48) aufweist, und dass wenigstens zwei, vorzugsweise alle Heizelemente (20, 22, 24, 26) im Wesentlichen die gleiche vorzugsweise im Wesentlichen konstante Heizleiterbreite zwischen ihren jeweiligen Stirnseiten (46, 48) aufweisen oder/und im Wesentlichen die gleiche, vorzugsweise im Wesentlichen konstante Dicke zwischen ihren jeweiligen Breitseiten (50, 52) aufweisen.

3. Heizeinheit nach Anspruch 1 oder 2, **dadurch gekennzeichnet, dass** bei wenigstens einem Heizelement (22, 24) eine Quer-Abmessung (Q) quer zur Abgas-Hauptströmungsrichtung (A) und quer zur Heizelement-Längsrichtung (H) in Richtung der Heizelement-Längsrichtung (A) im Wesentlichen konstant ist, oder/und dass bei wenigstens einem Heizelement (20, 26) die Quer-Abmessung (Q) in Richtung der Heizelement-Längsrichtung (H) variiert, vorzugsweise wobei bei dem wenigstens einen Heizelement (22, 24) mit im Wesentlichen konstanter Quer-Abmessung (Q) die Quer-Abmessung (Q) kleiner ist, als eine maximale Quer-Abmessung des wenigstens einen Heizelements (20, 26) mit in der Heizelement-Längsrichtung (H) variierender Quer-Abmessung (Q).

4. Heizeinheit nach einem der Ansprüche 1-3, **dadurch gekennzeichnet, dass** die Heizelemente (20, 22, 24, 26) in ihren Anschlussbereichen (32, 34) mit Kontaktelementen elektrisch leitend verbunden sind, wobei wenigstens zwei Heizelemente (20, 22, 24, 26) in einem ihrer Anschlussbereiche (32, 34) mit einem der Kontaktelemente (36, 38, 40) elektrisch leitend sind und in ihrem anderen Anschlussbereich (32, 34) mit einem anderen der Kontaktelemente (36, 38, 40) elektrisch leitend verbunden sind.

5. Heizeinheit nach Anspruch 4, **dadurch gekennzeichnet, dass** bei einer ersten Gruppe (G₁) mit wenigstens zwei der Heizelemente (20, 22, 24, 26) die Heizelemente (20, 22) in ihrem einen Anschlussbereich (32) mit einem ersten der Kontaktelemente (36, 38, 40) elektrisch leitend verbunden sind und in ihrem anderen Anschlussbereich (34) mit einem zweiten der Kontaktelemente (36, 38, 40) elektrisch leitend verbunden sind, und dass bei einer zweiten Gruppe (G₂) mit wenigstens zwei der Heizelemente (20, 22, 24, 26) die Heizelemente (24, 26) in ihrem einen Anschlussbereich (32) mit einem dritten der Kontaktelemente (36, 38, 40) elektrisch leitend verbunden sind und in ihrem anderen Anschlussbereich (34) mit dem zweiten der Kontaktelemente (36, 38, 40) elektrisch leitend verbunden sind,
vorzugsweise wobei die Anzahl der Heizelemente (20, 22) der ersten Gruppe (G₁) gleich der Anzahl der Heizelemente (24, 26) der zweiten Gruppe (G₂) ist.

6. Heizeinheit nach einem der Ansprüche 1-5, **dadurch gekennzeichnet, dass** bei wenigstens zwei, vorzugsweise allen Heizelementen in der Heizelement-Längsrichtung (H) unmittelbar aufeinander folgende Heizabschnitte (28) in der Heizelement-Längsrichtung (H) im Wesentlichen den gleichen, vorzugsweise im Wesentlichen konstanten Abstand zueinander aufweisen, oder/und dass bei wenigstens zwei, vorzugsweise allen Heizelementen (20, 22, 24, 26) in der Heizelement-Längsrichtung (H) unmittelbar aufeinander folgende Heizabschnitte (28) zueinander im Wesentlichen parallel angeordnet sind.

7. Heizeinheit nach einem der Ansprüche 1-6, **dadurch gekennzeichnet, dass** bei wenigstens einem, vorzugsweise allen Heizelementen (20, 22, 24, 26) eine Abgas-Kontaktoberfläche wenigstens bereichsweise mit katalytisch wirksamem Material (78) bereitgestellt ist.

8. Heizeinheit nach einem der Ansprüche 1-7, **dadurch gekennzeichnet, dass** eine Halteeinheit (54) vorgesehen ist zum elektrisch isolierten Halten der Heizelemente (20, 22, 24, 26) an dem Heizeinheitgehäuse (18) oder/und zum elektrisch isolierten Halten von quer zur Heizelement-Längsrichtung (H) unmittelbar benachbarten Heizelementen (20, 22, 24, 26) bezüglich einander.

9. Heizeinheit nach Anspruch 8, **dadurch gekennzeichnet, dass** die Halteeinheit (54) einen alle Heizelemente (20, 22, 24, 26) im Wesentlichen ringartig umschließenden Heizeinheitgehäuse-Haltebereich (56) umfasst, oder/und dass die Halteeinheit (54) in Zuordnung zu wenigstens einem, vorzugsweise jedem Heizelement (20, 22, 24, 26) einen Heizelement-Haltebereich (58, 60, 62, 64, 66) umfasst, vorzugsweise wobei wenigstens ein Teil der Heizelement-Haltebereiche (58, 60, 62, 64, 66), vorzugsweise alle Heizelement-Haltebereiche (58, 60, 62, 64, 66), miteinander einstückig ausgebildet sind.

10. Heizeinheit nach Anspruch 9, **dadurch gekennzeichnet, dass** wenigstens ein, vorzugsweise jeder Heizelement-Haltebereich (58, 60, 62, 64, 64)) zwei in der Abgas-Hauptströmungsrichtung (A) aufeinanderfolgend angeordnete, voneinander getrennt ausgebildete Teile (74, 76) umfasst.

11. Heizeinheit nach einem der Ansprüche 9 oder 10, **dadurch gekennzeichnet, dass** wenigstens ein, vorzugsweise jeder Heizelement-Haltebereich (58, 60, 62, 64, 66) in Zuordnung zu wenigstens einem, vorzugsweise jedem dadurch gehaltenen Heizelement (20, 22, 24, 26) eine Formschluss-Halteformation (68) zum Halten wenigstens eines, vorzugsweise jedes Verbindungsabschnitts (30) des wenigstens einen dadurch gehaltenen Heizelements (20, 22, 24, 26) gegen Bewegung in der Heizelement-Längsrichtung (H) aufweist.

12. Heizeinheit nach Anspruch 11, **dadurch gekennzeichnet, dass** wenigstens eine, vorzugsweise jede Formschluss-Halteformation (68) eine Mehrzahl von jeweils zwischen zwei in der Heizelement-Längsrichtung (20, 22, 24, 26) unmittelbar benachbarte Verbindungsabschnitte (30) eingreifenden Haltevorsprüngen (70; 70a, 70b) umfasst, oder/und dass wenigstens eine, vorzugsweise jede Formschluss-Halteformation (68) eine Mehrzahl von jeweils zwischen zwei durch einen Verbindungsabschnitt (30) miteinander verbundenen Heizabschnitten (28) eingreifenden Haltevorsprüngen (72a, 72b) umfasst.

13. Heizeinheit nach einem der Ansprüche 9-12, **dadurch gekennzeichnet, dass** die Halteeinheit (54) wenigstens an ihren in Kontakt mit den Heizelementen (20, 22, 24, 26) stehenden Bereichen, vorzugsweise im Wesentlichen vollständig mit elektrisch isolierendem Material aufgebaut oder/und beschichtet ist.

14. Heizeinheit nach einem der Ansprüche 1-13, **dadurch gekennzeichnet, dass** alle Heizelemente (20, 22, 24, 26) quer zur Abgas-Hauptströmungsrichtung (A) nebeneinander angeordnet sind, oder/und dass wenigstens zwei, vorzugsweise alle Heizelemente (20, 22, 24, 26) mit zueinander im Wesentlichen paralleler Heizelement-Längsrichtung (H) angeordnet sind, oder/und dass bei wenigstens einem, vorzugsweise jedem Heizelement (20, 22, 24, 26) wenigstens ein Teil der, vorzugsweise alle Heizabschnitte (28) zur Heizelement-Längsrichtung (H) im Wesentlichen orthogonal angeordnet sind.

15. Abgasanlage für eine Brennkraftmaschine, umfassend eine Heizeinheit (14) nach einem der vorangehenden Ansprüche stromaufwärts bezüglich einer vorzugsweise einen Katalysator oder/und einen Partikelfilter umfassenden Abgasbehandlungseinheit (16).

## Claims

1. A heating unit for an exhaust-gas system of an internal combustion engine, comprising a heating-unit housing (18), through which gas can flow in an exhaust-gas main flow direction (A), and a plurality of heating elements (20, 22, 24, 26), which are arranged in the heating-unit housing (18) and are shaped in a meandering manner, wherein each heating element (20, 22, 24, 26) comprises a plurality of heating sections (28) which follow one another in a heating-element longitudinal direction (H), wherein heating sections (28), arranged so as to follow one another in the heating-element longitudinal direction (H), of each heating element (20, 22, 24, 26) are in each case connected to one another by a connecting section (30), wherein each heating element (20, 22, 24, 26) has two connection regions (32, 34) which are arranged at a distance from one another in the heating-element longitudinal direction, wherein, in each connection region (32, 34), the heating elements (20, 22, 24, 26) are or can be electrically conductively connected to a connection region (32, 34) of a further heating element (20, 22, 24, 26) or/and to a voltage source, wherein, for each heating element (20, 22, 24, 26), a heating-conductor length between its connection regions (32, 34) is greater than an extension length of the heating element (20, 22, 24, 26) between its connection regions (32, 34) in the heating-element longitudinal direction (H), wherein all the heating elements (20, 22, 24, 26) have substantially the same heating-conductor length, **characterized in that** the heating sections (28) are substantially adapted plate-like and **in that** at least two heating elements (20, 22, 24, 26) are arranged side by side transverse to the exhaust-gas main flow direction (A).

2. The heating unit as claimed in claim 1, **characterized in that** each heating element (20, 22, 24, 26) is constructed with bent flat strip material and has broad sides (50, 52) which are arranged substantially parallel to the exhaust-gas main flow direction (A) and has face sides (46, 48) which are arranged substantially orthogonally to the exhaust-gas main flow direction (A), and **in that** at least two, preferably all the heating elements (20, 22, 24, 26) have substantially the same, preferably substantially constant, heating-conductor width between their respective face sides (46, 48) or/and have substantially the same, preferably substantially constant, thickness between their respective broad sides (50, 52).

3. The heating unit as claimed in claim 1 or 2, **characterized in that**, for at least one heating element (22, 24), a transverse dimension (Q) transverse to the exhaust-gas main flow direction (A) and transverse to the heating-element longitudinal direction (H) is substantially constant in the direction of the heating-element longitudinal direction (H), or/and **in that**, for at least one heating element (20, 26), the transverse dimension (Q) varies in the direction of the heating-element longitudinal direction (H), preferably wherein for the at least one heating element (22, 24) with substantially constant transverse dimension (Q), the transverse dimension (Q) is smaller than a maximum transverse dimension of the at least one heating element (20, 26) with transverse dimension (Q) varying in the heating-element longitudinal direction (H).

4. The heating unit as claimed in one of claims 1-3, **characterized in that** the heating elements (20, 22, 24, 26) are electrically conductively connected in their connection regions (32, 34) to contact elements, wherein at least two heating elements (20, 22, 24, 26) are electrically conductively connected in one of their connection regions (32, 34) to one of the contact elements (36, 38, 40) and are electrically conductively connected in their other connection region (32, 34) to another one of the contact elements (36, 38, 40).

5. The heating unit as claimed in claim 4, **characterized in that**, in a first group (G₁) having at least two of the heating elements (20, 22, 24, 26), the heating elements (20, 22) are electrically conductively connected in one connection region (32) thereof to a first one of the contact elements (36, 38, 40) and are electrically conductively connected in the other connection region (34) thereof to a second one of the contact elements (36, 38, 40), and **in that**, in a second group (G₂) having at least two of the heating elements (20, 22, 24, 26), the heating elements (24, 26) are electrically conductively connected in one connection region (32) thereof to a third one of the contact elements (36, 38, 40) and are electrically conductively connected in the other connection region (34) thereof to the second one of the contact elements (36, 38, 40),
preferably wherein the number of heating elements (20, 22) of the first group (G₁) is equal to the number of heating elements (24, 26) of the second group (G₂).

6. The heating unit as claimed in one of claims 1-5, **characterized in that**, for at least two, preferably all the heating elements, heating sections (28) which directly follow one another in the heating-element longitudinal direction (H) are at substantially the same, preferably substantially constant, distance from one another in the heating-element longitudinal direction (H), or/and **in that**, for at least two, preferably all the heating elements (20, 22, 24, 26), heating sections (28) which directly follow one another in the heating-element longitudinal direction (H) are arranged substantially parallel to one another.

7. The heating unit as claimed in one of claims 1-6, **characterized in that**, for at least one, preferably all the heating elements (20, 22, 24, 26), an exhaust-gas contact surface is provided at least regionally with catalytically active material (78).

8. The heating unit as claimed in one of claims 1-7, **characterized in that** provision is made of a holding unit (54) for holding the heating elements (20, 22, 24, 26) on the heating-unit housing (18) in an electrically insulated manner, or/and for holding heating elements (20, 22, 24, 26) which are direct neighbours transverse to the heating-element longitudinal direction (H) in an electrically insulated manner with respect to one another.

9. The heating unit as claimed in claim 8, **characterized in that** the holding unit (54) comprises a heating-unit-housing holding region (56) which surrounds all the heating elements (20, 22, 24, 26) in a substantially ring-like manner, or/and **in that** the holding unit (54) comprises, in assignment to at least one, preferably each heating element (20, 22, 24, 26), a heating-element holding region (58, 60, 62, 64, 66), preferably wherein at least some of the heating-element holding regions (58, 60, 62, 64, 66), preferably all the heating-element holding regions (58, 60, 62, 64, 66), are formed in one piece with one another.

10. The heating unit as claimed in claim 9, **characterized in that** at least one, preferably each heating-element holding region (58, 60, 62, 64, 66) comprises two parts (74, 76) which are arranged so as to follow one another in the exhaust-gas main flow direction (A) and which are formed separately from one another.

11. The heating unit as claimed in one of claims 9 or 10, **characterized in that** at least one, preferably each heating-element holding region (58, 60, 62, 64, 66) has, in assignment to at least one, preferably each heating element (20, 22, 24, 26) held thereby, a form-fit holding formation (68) for holding against movement in the heating-element longitudinal direction (H) at least one, preferably each connecting section (30) of the at least one heating element (20, 22, 24, 26) held thereby.

12. The heating unit as claimed in claim 11, **characterized in that** at least one, preferably each form-fit holding formation (68) comprises a plurality of holding projections (70; 70a, 70b) which in each case engage between two connecting sections (30) which are direct neighbours in the heating-element longitudinal direction (H), or/and **in that** at least one, preferably each form-fit holding formation (68) comprises a plurality of holding projections (72a, 72b) which in each case engage between two heating sections (28) which are connected to one another by a connecting section (30).

13. The heating unit as claimed in one of claims 9-12, **characterized in that** the holding unit (54) is, at least at its regions which are in contact with the heating elements (20, 22, 24, 26), preferably substantially completely, constructed or/and coated with electrically insulating material.

14. The heating unit as claimed in one of claims 1-13, **characterized in that** all the heating elements (20, 22, 24, 26) are arranged adjacently transverse to the exhaust-gas main flow direction (A), or/and **in that** at least two, preferably all the heating elements (20, 22, 24, 26) are arranged with a substantially parallel heating-element longitudinal direction (H), or/and **in that**, for at least one, preferably for each heating element (20, 22, 24, 26), at least some, preferably all the heating sections (28) are arranged substantially orthogonally to the heating-element longitudinal direction (H).

15. An exhaust-gas system for an internal combustion engine, comprising a heating unit (14) as claimed in one of the preceding claims upstream of an exhaust-gas treatment unit (16) preferably comprising a catalytic converter or/and a particle filter.

## Revendications

1. Une unité de chauffage pour un système de gaz d'échappement d'un moteur à combustion interne, comprenant un boîtier d'unité de chauffage (18), à travers lequel le gaz peut circuler dans une direction principale d'écoulement des gaz d'échappement (A), et une pluralité d'éléments chauffants (20, 22, 24, 26), qui sont disposés dans le boîtier d'unité de chauffage (18) et ont une forme de méandre, dans lequel chaque élément chauffant (20, 22, 24, 26) comprend une pluralité de sections chauffantes qui se suivent dans une direction longitudinale de l'élément chauffant (H), dans lequel les sections chauffantes (28), disposées de manière à se suivre dans la direction longitudinale de l'élément chauffant (H), de chaque élément chauffant (20, 22, 24, 26) sont reliées l'une à l'autre par une section de connexion (30), dans lequel chaque élément chauffant (20, 22, 24, 26) présente deux zones de connexion (32, 34) qui sont disposées à une certaine distance l'une de l'autre dans la direction longitudinale de l'élément chauffant, dans lequel, dans chaque zone de connexion (32, 34), les éléments chauffants (20, 22, 24, 26) sont ou peuvent être connectés électriquement par conduction à une zone de connexion (32, 34) d'un autre élément chauffant (20, 22, 24, 26) ou/et à une source de tension, dans lequel, pour chaque élément chauffant (20, 22, 24, 26), une longueur de conducteur de chauffage entre ses zones de connexion (32, 34) est supérieure à une longueur d'extension de l'élément chauffant (20, 22, 24, 26) entre ses zones de connexion (32, 34) dans la direction longitudinale de l'élément chauffant (H), dans lequel tous les éléments chauffants (20, 22, 24, 26) ont sensiblement la même longueur de conducteur de chauffage, **caractérisé en ce que** les sections chauffantes (28) sont sensiblement adaptées en forme de plaque et **en ce qu'**au moins deux éléments chauffants (20, 22, 24, 26) sont disposés côte à côte transversalement à la direction principale d'écoulement des gaz d'échappement (A).

2. L'unité de chauffage selon la revendication 1, **caractérisée en ce que** chaque élément chauffant (20, 22, 24, 26) est construit avec un matériau en bande plate pliée et présente des faces larges (50, 52) qui sont disposés sensiblement parallèlement à la direction principale d'écoulement des gaz d'échappement (A) et des faces frontales (46, 48) qui sont disposés sensiblement orthogonalement à la direction principale d'écoulement des gaz d'échappement (A), et **en ce qu'**au moins deux, de préférence tous les éléments chauffants (20, 22, 24, 26) ont une largeur de conducteur de chauffage sensiblement identique, de préférence sensiblement constante, entre leurs faces frontales respectives (46, 48) ou/et présentent une épaisseur sensiblement identique, de préférence sensiblement constante, entre leurs faces larges respectives (50, 52).

3. L'unité de chauffage selon la revendication 1 ou 2, **caractérisée en ce que**, pour au moins un élément chauffant (22, 24), une dimension transversale (Q) transversale à la direction principale d'écoulement des gaz d'échappement (A) et transversale à la direction longitudinale de l'élément chauffant (H) est sensiblement constante dans la direction de la direction longitudinale de l'élément chauffant (H), ou/et **en ce que**, pour au moins un élément chauffant (20, 26), la dimension transversale (Q) varie selon la direction de la direction longitudinale de l'élément chauffant (H), de préférence dans lequel, pour ledit au moins un élément chauffant (22, 24) dont la dimension transversale (Q) est sensiblement constante, la dimension transversale (Q) est inférieure à une dimension transversale maximale dudit au moins un élément chauffant (20, 26) dont la dimension transversale (Q) varie dans la direction longitudinale de l'élément chauffant (H).

4. L'unité de chauffage selon l'une des revendications 1 à 3, **caractérisée en ce que** les éléments chauffants (20, 22, 24, 26) sont connectés électriquement par conduction dans leurs zones de connexion (32, 34) à des éléments de contact, dans lequel au moins deux éléments chauffants (20, 22, 24, 26) sont connectés électriquement par conduction dans l'une de leurs zones de connexion (32, 34) à l'un des éléments de contact (36, 38, 40) et sont connectés électriquement par conduction dans leur autre zone de connexion (32, 34) à un autre des éléments de contact (36, 38, 40).

5. L'unité de chauffage selon la revendication 4, **caractérisée en ce que**, dans un premier groupe (G₁) comportant au moins deux des éléments chauffants (20, 22, 24, 26), les éléments chauffants (20, 22) sont connectés électriquement par conduction dans une de leurs zones de connexion (32) à un premier des éléments de contact (36, 38, 40) et sont connectés électriquement par conduction dans l'autre zone de connexion (34) à un deuxième des éléments de contact (36, 38, 40), et **en ce que**, dans un deuxième groupe (G₂) comportant au moins deux des éléments chauffants (20, 22, 24, 26), les éléments chauffants (24, 26) sont connectés électriquement par conduction dans une de leurs zones de connexion (32) à un troisième des éléments de contact (36, 38, 40) et sont connectés électriquement par conduction dans l'autre zone de connexion (34) à un deuxième des éléments de contact (36, 38, 40),
de préférence dans lequel le nombre d'éléments chauffants (20, 22) du premier groupe (G₁) est égal au nombre d'éléments chauffants (24, 26) du deuxième groupe (G₂).

6. L'unité de chauffage selon l'une des revendications 1 à 5, **caractérisée en ce que**, pour au moins deux, de préférence tous les éléments chauffants, les sections chauffantes (28) qui se suivent directement dans la direction longitudinale de l'élément chauffant (H) sont à une distance sensiblement identique, de préférence sensiblement constante, les unes des autres dans la direction longitudinale de l'élément chauffant (H), ou/et **en ce que**, pour au moins deux, de préférence tous les éléments chauffants (20, 22, 24, 26), les sections chauffantes (28) qui se suivent directement dans la direction longitudinale de l'élément chauffant (H) sont agencées sensiblement parallèlement les unes aux autres.

7. L'unité de chauffage selon l'une des revendications 1 à 6, **caractérisée en ce que**, pour au moins un, de préférence tous les éléments chauffants (20, 22, 24, 26), une surface de contact avec les gaz d'échappement est pourvue au moins en quelques régions d'un matériau catalytiquement actif (78).

8. L'unité de chauffage selon l'une des revendications 1 à 7, **caractérisée en ce qu'**une unité de maintien (54) est prévue pour maintenir les éléments chauffants (20, 22, 24, 26) sur le boîtier d'unité de chauffage (18) de manière électriquement isolée, ou/et pour maintenir les éléments chauffants (20, 22, 24, 26) qui sont directement adjacents transversalement à la direction longitudinale de l'élément chauffant (H) de manière électriquement isolée l'un par rapport à l'autre.

9. L'unité de chauffage selon la revendication 8, **caractérisée en ce que** l'unité de maintien (54) comprend une zone de maintien de boîtier d'unité de chauffage (56) qui entoure tous les éléments chauffants (20, 22, 24, 26) de manière sensiblement annulaire, ou/et **en ce que** l'unité de maintien (54) comprend, en association à au moins un, de préférence à chaque élément chauffant (20, 22, 24, 26), une zone de maintien d'élément chauffant (58, 60, 62, 64, 66), de préférence dans lequel au moins certaines des zones de maintien d'élément chauffant (58, 60, 62, 64, 66), de préférence toutes les zones de maintien d'élément chauffant (58, 60, 62, 64, 66), sont formées d'une seule pièce l'une avec l'autre.

10. L'unité de chauffage selon la revendication 9, **caractérisée en ce qu'**au moins une, de préférence chaque zone de maintien d'élément chauffant (58, 60, 62, 64, 66) comprend deux parties (74, 76) qui sont disposées de manière à se suivre dans la direction principale d'écoulement des gaz d'échappement (A) et qui sont formées séparément l'une de l'autre.

11. L'unité de chauffage selon l'une des revendications 9 ou 10, **caractérisée en ce qu'**au moins une, de préférence chaque zone de maintien d'élément chauffant (58, 60, 62, 64, 66) comporte, en association avec au moins un, de préférence chaque élément chauffant (20, 22, 24, 26) qu'elle maintient, une formation de maintien de forme (68) pour maintenir contre le mouvement dans la direction longitudinale de l'élément chauffant (H) au moins une, de préférence chaque section de connexion (30) dudit au moins un élément chauffant (20, 22, 24, 26) qu'elle maintient.

12. L'unité de chauffage selon la revendication 11, **caractérisé en ce qu'**au moins une, de préférence chaque formation de maintien de forme (68) comprend une pluralité de saillies de maintien (70 ; 70a, 70b) qui s'engagent dans chaque cas entre deux sections de connexion (30) qui sont directement adjacentes dans la direction longitudinale de l'élément chauffant (H), ou/et **en ce qu'**au moins une, de préférence chaque formation de maintien de forme (68) comprend une pluralité de saillies de maintien (72a, 72b) qui s'engagent dans chaque cas entre deux sections chauffantes (28) qui sont reliées l'une à l'autre par une section de connexion (30).

13. L'unité de chauffage selon l'une des revendications 9 à 12, **caractérisée en ce que** l'unité de maintien (54) est, au moins dans ses zones en contact avec les éléments chauffants (20, 22, 24, 26), de préférence sensiblement entièrement, construite ou/et revêtue d'un matériau électriquement isolant.

14. L'unité de chauffage selon l'une des revendications 1 à 13, **caractérisée en ce que** tous les éléments chauffants (20, 22, 24, 26) sont disposés de manière adjacente transversalement à la direction principale d'écoulement des gaz d'échappement (A), ou/et **en ce qu'**au moins deux, de préférence tous les éléments chauffants (20, 22, 24, 26) sont disposés avec une direction longitudinale de l'élément chauffant (H) essentiellement parallèle, ou/et **en ce que**, pour au moins un, de préférence pour chaque élément chauffant (20, 22, 24, 26), au moins quelques-unes, de préférence toutes les sections chauffantes (28) sont disposées sensiblement orthogonalement à la direction longitudinale de l'élément chauffant (H).

15. Système de gaz d'échappement pour un moteur à combustion interne, comprenant une unité de chauffage (14) selon l'une des revendications précédentes en amont d'une unité de traitement des gaz d'échappement (16) comprenant de préférence un convertisseur catalytique ou/et un filtre à particules.
